# EUROPEAN PATENT SPECIFICATION

(11) **EP 4 489 448 B1**
(45) Date of publication and mention of the grant of the patent: **14.10.2026**
(21) Application number: 23762727.8
(22) Date of filing: 14.02.2023
(51) Int. Cl.: H04W 4/40, H04M 1/72409, H04W 4/48

(54) **VEHICLE-BASED INFORMATION EXCHANGE METHOD, HEAD UNIT END, STORAGE MEDIUM, AND VEHICLE**
FAHRZEUGBASIERTES INFORMATIONSAUSTAUSCHVERFAHREN, KOPFEINHEITSENDE, SPEICHERMEDIUM UND FAHRZEUG
PROCÉDÉ D'ÉCHANGE D'INFORMATIONS À BASE DE VÉHICULE, EXTRÉMITÉ D'UNITÉ DE TÊTE, SUPPORT DE STOCKAGE, ET VÉHICULE

(30) Priority: 03.03.2022 CN 202210210250
(43) Date of publication of application: 08.01.2025
(73) Proprietor: Great Wall Motor Company Limited, Baoding, Hebei 071000 (CN)
(72) Inventor: TIAN, Wenjun, Baoding, Hebei 071000 (CN); FU, Cai, Baoding, Hebei 071000 (CN); LI, Fenglei, Baoding, Hebei 071000 (CN); DUAN, Wenjie, Baoding, Hebei 071000 (CN); WANG, Guanlan, Baoding, Hebei 071000 (CN); LIU, Xin, Baoding, Hebei 071000 (CN); NIU, Junyi, Baoding, Hebei 071000 (CN)
(74) Representative: Klunker IP Patentanwälte PartG mbB
(86) International application number: PCT/CN2023/075889
(87) International publication number: WO 2023/165326

(56) References cited:
- EP-A2- 3 958 577
- CN-A- 110 337 060
- CN-A- 110 455 308
- CN-A- 111 432 020
- CN-A- 112 954 648
- CN-A- 115 226 070
- CN-A- 115 250 447
- CN-B- 110 455 308

## Description

### TECHNICAL FIELD

The present invention relates to the field of intelligent cars, and particularly relates to a vehicle-based method for information interaction, a in-vehicle terminal, a storage medium and a vehicle.

### BACKGROUND

While the popularizing rate of intelligent cars is increasing year by year and intelligent terminals (mobile phones, tablet personal computers, notebook computers and so on) have basically realized the all-around coverage of all of the user groups, the interconnection and the interaction between vehicles and between vehicles and mobile phones are becoming increasingly more common. Furthermore, while youngsters are gradually becoming the major car buyers, the configurations of the interaction between vehicles and intelligent terminals such as mobile phones and vehicles are developing with the trend of personalization and diversity, and the vehicles and the mobile phones are rapidly developing with the trend of total interoperability and mutual compatibility.

Currently, the current configurations of the information interaction between the mobile phone and the vehicle are merely for the information interaction between the mobile phone of the vehicle owner and the vehicle of the vehicle owner. Intelligent terminals of users related to the vehicle owner (for example, the family members of the vehicle owner) cannot perform information interaction with the vehicle of the vehicle owner.

Accordingly, how to ensure that intelligent terminals interact with the vehicle has become a problem urgently needed to be solved in the art.

CN 112 954 648 A discloses method for interaction between a mobile terminal and an in-vehicle terminal, a related terminal, and a related system, The method is applied to a mobile terminal. The mobile terminal establishes a communication connection to an in-vehicle terminal. The method includes: The mobile terminal receives first information sent by the in-vehicle terminal, where the first information indicates to execute a first function. The mobile terminal determines a first indication based on the first information, and sends the first indication to the in-vehicle terminal, where the first indication indicates the in-vehicle terminal to obtain second information. The mobile terminal receives the second information sent by the in-vehicle terminal. The mobile terminal executes the first function based on the second information. In other word, after receiving a user command (the first information, such as a complex user command) of the in-vehicle terminal, a mobile terminal automatically analyzes the user command. When it is determined that a software apparatus or a hardware apparatus of the in-vehicle terminal needs to be invoked to collect information (the second information), the mobile terminal automatically sends a collection indication (the first indication) to the in-vehicle terminal, and completes execution of the user command after obtaining corresponding information. Thereby, the mobile terminal analyzes a complex command, performs intelligent interaction with the in-vehicle terminal, and invokes software and hardware apparatuses of the in-vehicle terminal to collect information, to cooperate to satisfy a deep intention of the user.

CN 110 455 308 B discloses a navigation method, wherein a navigation request is sent to a mobile terminal; the navigation request includes navigation requirement information of a vehicle machine end, so that the mobile terminal converts the navigation requirement information into vehicle machine end navigation data according to the data format corresponding to at least one target graph layer in the known vehicle machine end; the vehicle machine end navigation data sent by the mobile terminal is received; and the vehicle machine end navigation data is rendered to the corresponding target graph layer. Thus, when navigation is started, online navigation data sent by the mobile terminal and corresponding to the data format of the target graph layer is obtained, and rendered to the corresponding target graph layer; and thus, online navigation of the vehicle machine end is realized.

### SUMMARY

It is an object of the present invention to provide a vehicle-based method for information interaction, a corresponding in-vehicle terminal and a corresponding intelligent terminal, a storage medium, and a vehicle, for the purpose of ensuring that an intelligent terminal interacts with the vehicle.

The object is achieved by the features of independent claims 1 and 5 of independent claim 9 regarding the computer-readable storage medium, and of independent claim 0 regarding the vehicle.

The technical solutions according to the present invention are applied to a in-vehicle terminal. The in-vehicle terminal, in response to the activating operation by the user, sends the first interaction request to the intelligent terminal having the binding relation with the in-vehicle terminal, to cause the intelligent terminal to execute the responding operation that was deployed in advance in the intelligent terminal, and, after the second interaction request sent by the intelligent terminal has been received, executes the responding operation corresponding to the state of the vehicle. On the basis of the solutions of the present invention, the user can trigger, by using the activating operation, the in-vehicle terminal to interact with the intelligent terminal. In the interaction, the in-vehicle terminal sends the first interaction request to the intelligent terminal, to cause the intelligent terminal to execute the responding operation that was deployed in advance in the intelligent terminal, and, based on the second interaction request sent by the intelligent terminal, executes the responding operation corresponding to the state of the vehicle, to realize the effective interaction between the intelligent terminal and the vehicle, so as to provide a novel interaction mode for the vehicle, thereby enriching the user experience of the vehicle.

### BRIEF DESCRIPTION OF THE DRAWINGS

In order to more clearly illustrate the technical solutions of the present invention or the prior art, the figures that are required to describe the invention or the prior art will be briefly described below.
FIG. 1 is a schematic flow chart of a vehicle-based method for information interaction;
FIG. 2 is a schematic flow chart of another vehicle-based method for information interaction;
FIG. 3 is a schematic flow chart of another vehicle-based method for information interaction;
FIG. 4 is a schematic flow chart of another vehicle-based method for information interaction;
FIG. 5 is a schematic flow chart of another vehicle-based method for information interaction;
FIG. 6 is a schematic flow chart of another vehicle-based method for information interaction;
FIG. 7 is a schematic flow chart of another vehicle-based method for information interaction;
FIG. 8 is a schematic flow chart of another vehicle-based method for information interaction;
FIG. 9 is a schematic diagram of the architecture of a in-vehicle terminal; and
FIG. 10 is a schematic diagram of the architecture of an intelligent terminal.

### DETAILED DESCRIPTION

The technical solutions of the present invention will be clearly and completely described below with reference to the drawings.

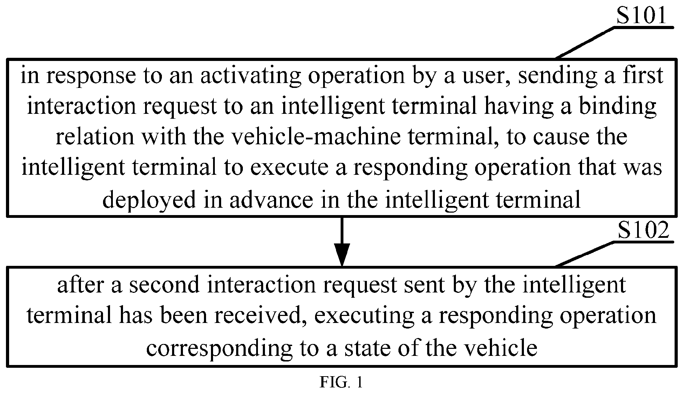

As shown in FIG. 1, FIG. 1 is a schematic flow chart of a vehicle-based method for information interaction . The method is applied to an in-vehicle terminal (also referred as vehicle-mounted terminal or in-vehicle infotainment system or vehicle terminal, for example HUT) which can interact with a mobile terminal, and comprises the following steps:

S101: in response to an activating operation by a user, sending a first interaction request to an intelligent terminal having a binding relation with the in-vehicle terminal, to cause the intelligent terminal to execute a responding operation that was deployed in advance in the intelligent terminal.

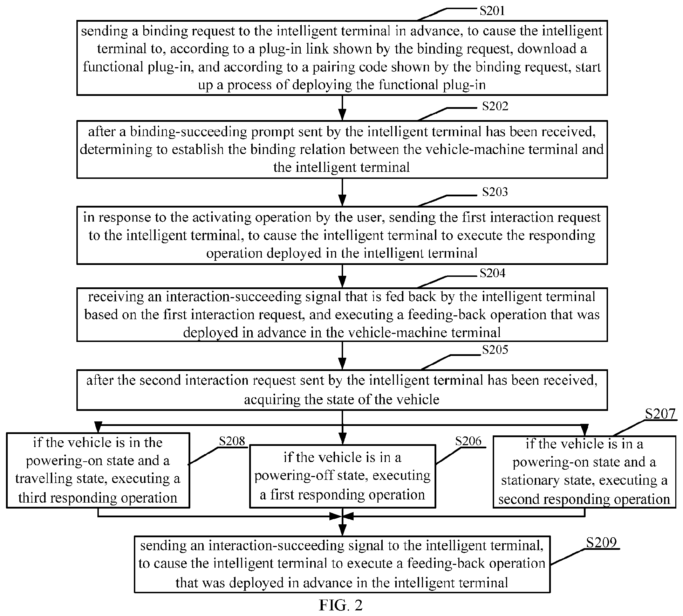

The particular principle of an implementation of the step of, in response to the activating operation by the user, sending the first interaction request to the intelligent terminal having the binding relation with the in-vehicle terminal may refer to the following interpretation and description with reference to S201-S204 shown in FIG. 2.

S102: after a second interaction request sent by the intelligent terminal has been received, executing a responding operation corresponding to a state of the vehicle.

The particular principle of an implementation of the step of, after the second interaction request sent by the intelligent terminal has been received, executing the responding operation corresponding to the state of the vehicle may refer to the following interpretation and description with reference to S205-S209 shown in FIG. 2.

In conclusion, the user can trigger, by using the activating operation, the in-vehicle terminal to interact with the intelligent terminal. In the interaction, the in-vehicle terminal sends the first interaction request to the intelligent terminal, to cause the intelligent terminal to execute the responding operation that was deployed in advance in the intelligent terminal, and, based on the second interaction request sent by the intelligent terminal, executes the responding operation corresponding to the state of the vehicle, to realize the effective interaction between the intelligent terminal and the vehicle, so as to provide a novel interaction mode for the vehicle, thereby enriching the user experience of the vehicle.

FIG. 2 is a schematic flow chart comprising a particular principle of the implementation of the step S101. The method is applied to a in-vehicle terminal, and comprises the following steps:
S201: sending a binding request to the intelligent terminal in advance, to cause the intelligent terminal to, according to a plug-in link shown by the binding request, download a functional plug-in, and according to a pairing code shown by the binding request, start up a process of deploying the functional plug-in.

The functional plug-in contains a responding operation and a feeding-back operation that are pre-configured. The type of the intelligent terminal includes but is not limited to a mobile-phone system and an in-vehicle system. Correspondingly, if the intelligent terminal is the mobile-phone system, then the responding operation deployed in the mobile-phone system may be playing a predetermined animation (for example, a dazzle color heart-shape animation) and a predetermined prompt tone (for example, a Ding Dong sound, a human voice of "Ding Dong expresses the affection" and so on), and the feeding-back operation deployed in the mobile-phone system may be playing a predetermined animation.

It should be noted that the functional plug-in contains a responding operation and a feeding-back operation that are pre-configured. Both of the mobile-phone system and the in-vehicle system may, by being provided with the functional plug-in, realize the pre-configuration of the responding operation and the feeding-back operation. Moreover, in the process of the deployment of the functional plug-in in the mobile-phone system, the mobile-phone system is upgraded, so that the mobile-phone system can be adapted for the functional plug-in.

In addition, in the in-vehicle terminal, the correspondence address of the mobile-phone system or the in-vehicle system has already been pre-configured. After the in-vehicle terminal has been provided with the responding operation and the feeding-back operation of itself, the in-vehicle terminal sends the binding request to the mobile-phone system or the in-vehicle system according to the correspondence address, to seek to establish the binding relation with the mobile-phone system or the in-vehicle system.

If the intelligent terminal is the in-vehicle system, then the responding operation deployed in the in-vehicle system comprises a first responding operation, a second responding operation and a third responding operation, and the feeding-back operation deployed in the in-vehicle system may be controlling a center-control screen to play a predetermined animation. Particularly, the so-called first responding operation is for sending a notification request to a mobile device of the user (which particularly refers to the owner of the in-vehicle system), to cause the mobile device to play a predetermined animation and a predetermined sound effect. The so-called second responding operation is for controlling the center-control screen to play the predetermined animation, controlling an ambient light to operate, and controlling a loudspeaker box to play the predetermined prompt tone. The so-called third responding operation is for controlling the center-control screen to display a predetermined pop-up window, and controlling the loudspeaker box to play the predetermined prompt tone.

Optionally, the in-vehicle terminal may send the binding request to a predetermined in-vehicle-background information server, to trigger the in-vehicle-background information server to send to the intelligent terminal the plug-in link and the pairing code shown by the binding request. Generally, the modes of the communication between the in-vehicle terminal, the in-vehicle-background information server and the intelligent terminal include but are not limited to 4G network communication, 5G network communication and Bluetooth communication. In other words, the in-vehicle-background information server may be deemed as a transfer station for the information interaction between the in-vehicle terminal and the intelligent terminal.

S202: after a binding-succeeding prompt sent by the intelligent terminal has been received, determining to establish the binding relation between the in-vehicle terminal and the intelligent terminal.

The intelligent terminal, after successfully provided with the functional plug-in, sends a binding-succeeding prompt to the in-vehicle terminal, so as to establish the binding relation with the in-vehicle terminal.

S203: in response to the activating operation by the user, sending the first interaction request to the intelligent terminal, to cause the intelligent terminal to execute the responding operation deployed in the intelligent terminal.

The activating operation by the user includes but is not limited to hand-gesture activation (i.e., performing a predetermined hand gesture to a predetermined camera), voice activation (i.e., speaking a predetermined voice to a predetermined microphone), clicking a predetermined shortcut key at the in-vehicle terminal, and performing a triggering operation to the center-control screen.

Particularly, if the intelligent terminal is the mobile-phone system, then after the first interaction request has been received, the mobile-phone system plays the predetermined animation and the predetermined prompt tone. If the intelligent terminal is the in-vehicle system, then after the first interaction request has been received, the in-vehicle system acquires the state of the vehicle that the in-vehicle system belongs to; if the vehicle is in a powering-off state, executes the first responding operation; if the vehicle is in a powering-on state and a stationary state, executes the second responding operation; and if the vehicle is in the powering-on state and a travelling state, executes the third responding operation.

S204: receiving an interaction-succeeding signal that is fed back by the intelligent terminal based on the first interaction request, and executing a feeding-back operation that was deployed in advance in the in-vehicle terminal.

The intelligent terminal, after executing the responding operation deployed in the intelligent terminal, sends an interaction-succeeding signal to the in-vehicle terminal. Accordingly, the in-vehicle terminal, after has received the interaction-succeeding signal that is fed back by the intelligent terminal based on the first interaction request, executes the feeding-back operation that was deployed in advance in the in-vehicle terminal.

It should be noted that the feeding-back operation that was deployed in advance in the in-vehicle terminal may be controlling the center-control screen to play the predetermined animation. The in-vehicle terminal may realize the provision of the feeding-back operation by being installed with the functional plug-in.

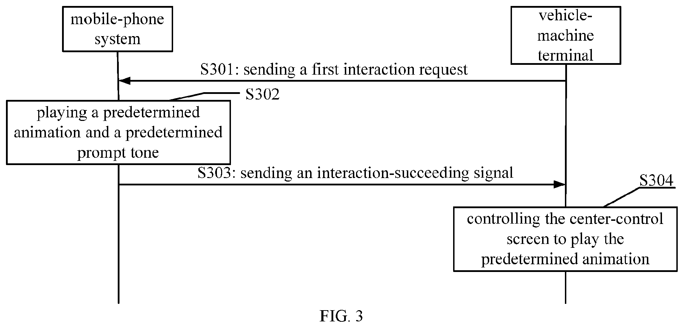

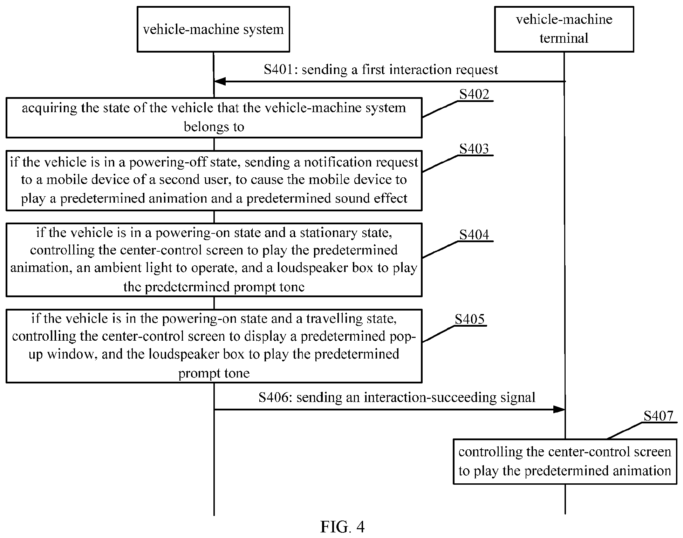

The flow shown by S201-S204 is that the in-vehicle terminal, in response to the activation request by the user, actively interacts with the intelligent terminal. Regarding the different types of the intelligent terminal, the mode of the implementation of the active interaction by the in-vehicle terminal with the mobile-phone system may refer to the flow shown in FIG. 3, and the mode of the implementation of the active interaction by the in-vehicle terminal with the in-vehicle system may refer to the flow shown in FIG. 4.

Moreover, after the intelligent terminal has established the binding relation with the in-vehicle terminal, the intelligent terminal may actively interact with the in-vehicle terminal. Particularly, the process of the active interaction by the intelligent terminal with the in-vehicle terminal has the flow shown by the following S205-S209.

S205: after the second interaction request sent by the intelligent terminal has been received, acquiring the state of the vehicle.

S206: if the vehicle is in a powering-off state, executing a first responding operation.

After S206 has been executed, S209 continues to be executed.

The first responding operation is for sending a notification request to a mobile device of the user, to cause the mobile device to play the predetermined animation and the predetermined prompt tone.

S207: if the vehicle is in a powering-on state and a stationary state, executing a second responding operation.

After S207 has been executed, S209 continues to be executed.

The second responding operation is for controlling the center-control screen to play the predetermined animation, controlling an ambient light to operate, and controlling a loudspeaker box to play the predetermined prompt tone.

S208: if the vehicle is in the powering-on state and a travelling state, executing a third responding operation.

After S208 has been executed, S209 continues to be executed.

The third responding operation is for controlling the center-control screen to display a predetermined pop-up window (the predetermined pop-up window contains a predetermined text message, for example, "xx is missing you"), and controlling the loudspeaker box to play the predetermined prompt tone.

It should be noted that all of the first responding operation, the second responding operation and the third responding operation are a responding operation that was deployed in advance by the in-vehicle terminal with respect to the state of the vehicle. The in-vehicle terminal may realize the provision of the responding operation by being installed with the functional plug-in.

S209: sending an interaction-succeeding signal to the intelligent terminal, to cause the intelligent terminal to execute a feeding-back operation that was deployed in advance in the intelligent terminal.

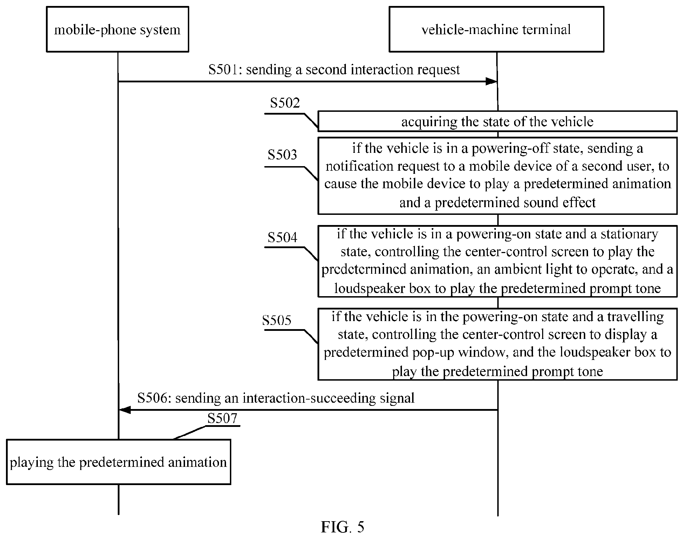

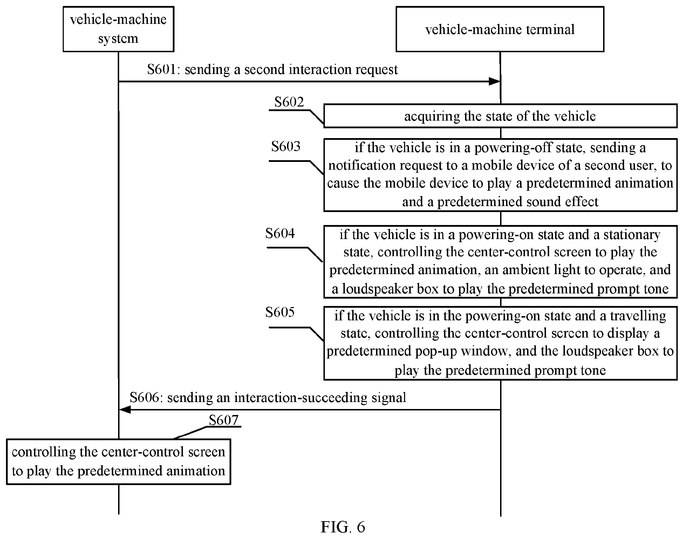

The flow shown by S205-S209 is that the intelligent terminal, in response to the activation request by the user, actively interacts with the in-vehicle terminal. Regarding the different types of the intelligent terminal, the mode of the implementation of the active interaction by the mobile-phone system with the in-vehicle terminal may refer to the flow shown in FIG. 5, and the mode of the implementation of the active interaction by the in-vehicle system with the in-vehicle terminal may refer to the flow shown in FIG. 6.

In conclusion, the user can trigger, by using the activating operation, the in-vehicle terminal to interact with the intelligent terminal. In the interaction, the in-vehicle terminal sends the first interaction request to the intelligent terminal, to cause the intelligent terminal to execute the responding operation that was deployed in advance in the intelligent terminal, and, based on the second interaction request sent by the intelligent terminal, executes the responding operation corresponding to the state of the vehicle, to realize the effective interaction between the intelligent terminal and the vehicle, so as to provide a novel interaction mode for the vehicle, thereby enriching the user experience of the vehicle.

As shown in FIG. 3, FIG. 3 is a schematic flow chart of another method for information interaction based on a vehicle. The method comprises the following steps:

S301: by the in-vehicle terminal, in response to an activating operation by a user, sending a first interaction request to the mobile-phone system.

S302: after the first interaction request has been received, playing, by the mobile-phone system, a predetermined animation and a predetermined prompt tone.

S303: by the mobile-phone system, sending an interaction-succeeding signal to the in-vehicle terminal.

S304: after the interaction-succeeding signal has been received, controlling, by the in-vehicle terminal, the center-control screen to play the predetermined animation.

On the basis of the flow shown by S301-S304, the effective interaction between the in-vehicle terminal and the mobile-phone system can be realized.

As shown in FIG. 4, FIG. 4 is a schematic flow chart of another method for information interaction based on a vehicle. The method comprises the following steps:

S401: by the in-vehicle terminal, in response to an activating operation by a first user, sending a first interaction request to the in-vehicle system.

The first user is the owner of the vehicle that the in-vehicle terminal belongs to.

S402: after the first interaction request has been received, acquiring, by the in-vehicle system, the state of the vehicle that the in-vehicle system belongs to.

S403: if the vehicle is in a powering-off state, sending, by the in-vehicle system, a notification request to a mobile device of a second user, to cause the mobile device to play a predetermined animation and a predetermined sound effect.

The second user is the owner of the vehicle that the in-vehicle system belongs to.

S404: if the vehicle is in a powering-on state and a stationary state, controlling, by the in-vehicle system, the center-control screen to play the predetermined animation, an ambient light to operate, and a loudspeaker box to play the predetermined prompt tone.

S405: if the vehicle is in the powering-on state and a travelling state, controlling, by the in-vehicle system, the center-control screen to display a predetermined pop-up window, and the loudspeaker box to play the predetermined prompt tone.

S406: by the in-vehicle system, sending an interaction-succeeding signal to the in-vehicle terminal.

S407: after the interaction-succeeding signal has been received, controlling, by the in-vehicle terminal, the center-control screen to play the predetermined animation.

On the basis of the flow shown by S401-S407, the effective interaction between the in-vehicle terminal and the in-vehicle system can be realized.

As shown in FIG. 5, FIG. 5 is a schematic flow chart of another method for information interaction based on a vehicle. The method comprises the following steps:

S501: by the mobile-phone system, in response to an activating operation by a second user, sending a second interaction request to the in-vehicle terminal.

The activating operation that the mobile-phone system responds to includes but is not limited to that the user performs a triggering operation to a predetermined interface of the mobile-phone system (for example, when the mobile-phone system is in the black-screen state, the user draws a heart-shaped pattern on the screen of the mobile phone, and when the mobile-phone system is normal, the user performs interface switching on the screen of the mobile phone, or clicks a predetermined button of the mobile-phone system).

S502: after the second interaction request has been received, by the in-vehicle terminal, acquiring the state of the vehicle.

S503: if the vehicle is in a powering-off state, sending, by the in-vehicle terminal, a notification request to a mobile device of a first user, to cause the mobile device to play a predetermined animation and a predetermined sound effect.

S504: if the vehicle is in a powering-on state and a stationary state, controlling, by the in-vehicle terminal, the center-control screen to play the predetermined animation, an ambient light to operate, and a loudspeaker box to play the predetermined prompt tone.

S505: if the vehicle is in the powering-on state and a travelling state, controlling, by the in-vehicle terminal, the center-control screen to display a predetermined pop-up window, and the loudspeaker box to play the predetermined prompt tone.

S506: by the in-vehicle terminal, sending an interaction-succeeding signal to the mobile-phone system.

S507: after the interaction-succeeding signal has been received, playing, by the mobile-phone system, a predetermined animation.

On the basis of the flow shown by S501-S507, the effective interaction between the in-vehicle terminal and the mobile-phone system can be realized.

As shown in FIG. 6, FIG. 6 is a schematic flow chart of another method for information interaction based on a vehicle. The method comprises the following steps:

S601: by the in-vehicle system, in response to an activating operation by a second user, sending a second interaction request to the in-vehicle terminal.

The activating operation that the in-vehicle system responds to includes but is not limited to hand-gesture activation (performing a predetermined hand gesture to a predetermined camera), voice activation (speaking a predetermined voice to a predetermined microphone), clicking a predetermined shortcut key at the in-vehicle system, and performing a triggering operation on the center-control screen.

S602: after the second interaction request has been received, by the in-vehicle terminal, acquiring the state of the vehicle.

S603: if the vehicle is in a powering-off state, sending, by the in-vehicle terminal, a notification request to a mobile device of a first user, to cause the mobile device to play a predetermined animation and a predetermined sound effect.

S604: if the vehicle is in a powering-on state and a stationary state, controlling, by the in-vehicle terminal, the center-control screen to play the predetermined animation, an ambient light to operate, and a loudspeaker box to play the predetermined prompt tone.

S605: if the vehicle is in the powering-on state and a travelling state, controlling, by the in-vehicle terminal, the center-control screen to display a predetermined pop-up window, and the loudspeaker box to play the predetermined prompt tone.

S606: by the in-vehicle terminal, sending an interaction-succeeding signal to the in-vehicle system.

S607: after the interaction-succeeding signal has been received, controlling, by the in-vehicle system, the center-control screen to play the predetermined animation.

On the basis of the flow shown by S601-S607, the effective interaction between the in-vehicle terminal and the in-vehicle system can be realized.

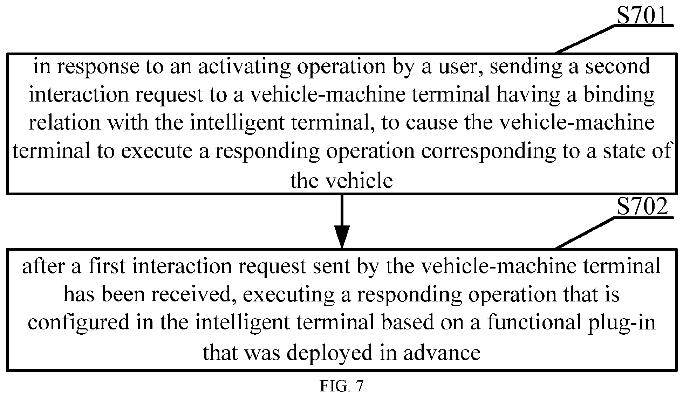

As shown in FIG. 7, FIG. 7 is a schematic flow chart of another method for information interaction based on a vehicle. The method is applied to an intelligent terminal, and comprises the following steps:
S701: in response to an activating operation by a user, sending a second interaction request to a in-vehicle terminal having a binding relation with the intelligent terminal, to cause the in-vehicle terminal to execute a responding operation corresponding to a state of the vehicle.

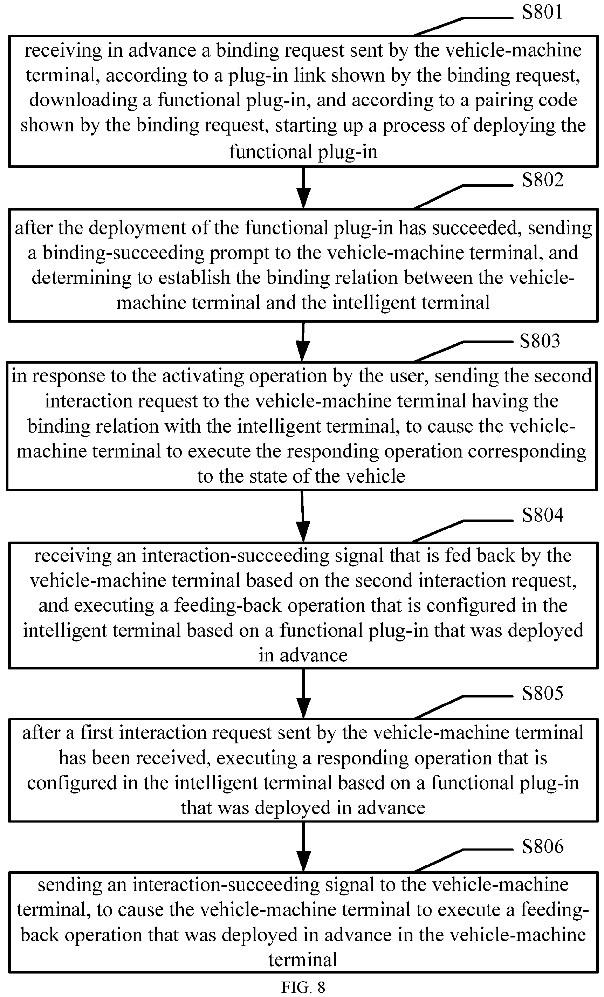

The particular principle of implementation of the step of, in response to the activating operation by the user, sending the second interaction request to the in-vehicle terminal having the binding relation with the intelligent terminal, to cause the in-vehicle terminal to execute the responding operation corresponding to the state of the vehicle may refer to the following S801-S804 shown in FIG. 8.

S702: after a first interaction request sent by the in-vehicle terminal has been received, executing a responding operation that is configured in the intelligent terminal based on a functional plug-in that was deployed in advance.

The particular principle of implementation of the step of, after the first interaction request sent by the in-vehicle terminal has been received, executing the responding operation that is configured in the intelligent terminal based on the functional plug-in that was deployed in advance may refer to the following S805-S806 shown in FIG. 8.

In conclusion, the user can trigger, by using the activating operation, the intelligent terminal to interact with the in-vehicle terminal. In the interaction, the in-vehicle terminal sends the first interaction request to the intelligent terminal, to cause the intelligent terminal to execute the responding operation that was deployed in advance in the intelligent terminal, and, based on the second interaction request sent by the intelligent terminal, executes the responding operation corresponding to the state of the vehicle, to realize the effective interaction between the intelligent terminal and the vehicle, so as to provide a novel interaction mode for the vehicle, thereby enriching the user experience of the vehicle.

As shown in FIG. 8, FIG. 8 is a schematic flow chart of another method for information interaction based on a vehicle. The method is applied to an intelligent terminal, and comprises the following steps:

S801: receiving in advance a binding request sent by the in-vehicle terminal, according to a plug-in link shown by the binding request, downloading a functional plug-in, and according to a pairing code shown by the binding request, starting up a process of deploying the functional plug-in.

The functional plug-in contains a responding operation and a feeding-back operation that are pre-configured.

S802: after the deployment of the functional plug-in has succeeded, sending a binding-succeeding prompt to the in-vehicle terminal, and determining to establish the binding relation between the in-vehicle terminal and the intelligent terminal.

S803: in response to the activating operation by the user, sending the second interaction request to the in-vehicle terminal having the binding relation with the intelligent terminal, to cause the in-vehicle terminal to execute the responding operation corresponding to the state of the vehicle.

S804: receiving an interaction-succeeding signal that is fed back by the in-vehicle terminal based on the second interaction request, and executing a feeding-back operation that is configured in the intelligent terminal based on a functional plug-in that was deployed in advance.

S805: after a first interaction request sent by the in-vehicle terminal has been received, executing a responding operation that is configured in the intelligent terminal based on a functional plug-in that was deployed in advance.

S806: sending an interaction-succeeding signal to the in-vehicle terminal, to cause the in-vehicle terminal to execute a feeding-back operation that was deployed in advance in the in-vehicle terminal.

In conclusion, the user can trigger, by using the activating operation, the intelligent terminal to interact with the in-vehicle terminal. In the interaction, the in-vehicle terminal sends the first interaction request to the intelligent terminal, to cause the intelligent terminal to execute the responding operation that was deployed in advance in the intelligent terminal, and, based on the second interaction request sent by the intelligent terminal, executes the responding operation corresponding to the state of the vehicle, to realize the effective interaction between the intelligent terminal and the vehicle, so as to provide a novel interaction mode for the vehicle, thereby enriching the user experience of the vehicle.

As corresponding to the method for information interaction based on a vehicle according to the present invention, the present invention further provides an in-vehicle terminal and an intelligent terminal.

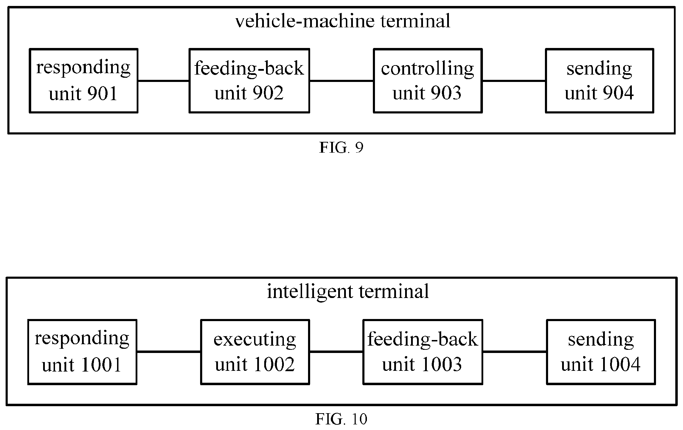

As shown in FIG. 9, FIG. 9 is a schematic diagram of the architecture of an in-vehicle terminal. The in-vehicle terminal comprises:
a responding unit 901 configured for, in response to an activating operation by a user, sending a first interaction request to an intelligent terminal having a binding relation with the in-vehicle terminal, to cause the intelligent terminal to execute a responding operation that was deployed in advance in the intelligent terminal.

The responding unit 901 is particularly configured for:
sending a binding request to the intelligent terminal in advance, to cause the intelligent terminal to, according to a plug-in link shown by the binding request, download a functional plug-in, and according to a pairing code shown by the binding request, start up a process of deploying the functional plug-in, wherein the functional plug-in contains a responding operation that is pre-configured;
after a binding-succeeding prompt sent by the intelligent terminal has been received, determining to establish the binding relation between the in-vehicle terminal and the intelligent terminal; and
in response to the activating operation by the user, sending the first interaction request to the intelligent terminal, to cause the intelligent terminal to execute the responding operation deployed in the intelligent terminal.

The in-vehicle terminal further comprises:
a feeding-back unit 902 configured for receiving an interaction-succeeding signal that is fed back by the intelligent terminal based on the first interaction request, and controlling the vehicle to execute a feeding-back operation that was deployed in advance in the in-vehicle terminal.

The in-vehicle terminal further comprises:
a controlling unit 903 configured for, after a second interaction request sent by the intelligent terminal has been received, executing a responding operation corresponding to a state of the vehicle.

The controlling unit 903 is particularly configured for:
after the second interaction request sent by the intelligent terminal has been received, acquiring the state of the vehicle;
if the vehicle is in a powering-off state, executing a first responding operation, wherein the first responding operation is for sending a notification request to a mobile device of the user, to cause the mobile device to play a predetermined animation and a predetermined prompt tone;
if the vehicle is in a powering-on state and a stationary state, executing a second responding operation, wherein the second responding operation is for controlling a center-control screen to play the predetermined animation, controlling an ambient light to operate, and controlling a loudspeaker box to play the predetermined prompt tone; and
if the vehicle is in the powering-on state and a travelling state, executing a third responding operation, wherein the third responding operation is for controlling the center-control screen to display a predetermined pop-up window, and controlling the loudspeaker box to play the predetermined prompt tone.

The in-vehicle terminal further comprises:
a sending unit 904 configured for sending an interaction-succeeding signal to the intelligent terminal, to cause the intelligent terminal to execute a feeding-back operation that was deployed in advance in the intelligent terminal.

In conclusion, the user can trigger, by using the activating operation, the in-vehicle terminal to interact with the intelligent terminal. In the interaction, the in-vehicle terminal sends the first interaction request to the intelligent terminal, to cause the intelligent terminal to execute the responding operation that was deployed in advance in the intelligent terminal, and, based on the second interaction request sent by the intelligent terminal, executes the responding operation corresponding to the state of the vehicle, to realize the effective interaction between the intelligent terminal and the vehicle, so as to provide a novel interaction mode for the vehicle, thereby enriching the user experience of the vehicle.

As shown in FIG. 10, FIG. 10 is a schematic diagram of the architecture of an intelligent terminal. The intelligent terminal comprises:
a responding unit 1001 configured for, in response to an activating operation by a user, sending a second interaction request to a in-vehicle terminal having a binding relation with the intelligent terminal, to cause the in-vehicle terminal to execute a responding operation corresponding to a state of the vehicle.

The responding unit 1001 is particularly configured for:
receiving in advance a binding request sent by the in-vehicle terminal, according to a plug-in link shown by the binding request, downloading a functional plug-in, and according to a pairing code shown by the binding request, starting up a process of deploying the functional plug-in, wherein the functional plug-in contains a responding operation and a feeding-back operation that are pre-configured;
after the deployment of the functional plug-in has succeeded, sending a binding-succeeding prompt to the in-vehicle terminal, and determining to establish the binding relation between the in-vehicle terminal and the intelligent terminal; and
in response to the activating operation by the user, sending the second interaction request to the in-vehicle terminal having the binding relation with the intelligent terminal, to cause the in-vehicle terminal to execute the responding operation corresponding to the state of the vehicle.

The intelligent terminal further comprises:
an executing unit 1002 configured for, after a first interaction request sent by the in-vehicle terminal has been received, executing a responding operation that is configured in the intelligent terminal based on a functional plug-in that was deployed in advance.

The intelligent terminal further comprises:
a feeding-back unit 1003 configured for receiving an interaction-succeeding signal that is fed back by the in-vehicle terminal based on the second interaction request, and executing a feeding-back operation that is configured in the intelligent terminal based on a functional plug-in that was deployed in advance.

The intelligent terminal further comprises:
a sending unit 1004 configured for sending an interaction-succeeding signal to the in-vehicle terminal, to cause the in-vehicle terminal to execute a feeding-back operation that was deployed in advance in the in-vehicle terminal.

In conclusion, the user can trigger, by using the activating operation, the intelligent terminal to interact with the in-vehicle terminal. In the interaction, the in-vehicle terminal sends the first interaction request to the intelligent terminal, to cause the intelligent terminal to execute the responding operation that was deployed in advance in the intelligent terminal, and, based on the second interaction request sent by the intelligent terminal, executes the responding operation corresponding to the state of the vehicle, to realize the effective interaction between the intelligent terminal and the vehicle, so as to provide a novel interaction mode for the vehicle, thereby enriching the user experience of the vehicle.

The present invention further provides a computer-readable storage medium, wherein the computer-readable storage medium contains a stored program, and the program implements the method for information interaction based on a vehicle according to the present invention.

The present invention further provides a vehicle, wherein the vehicle comprises: a processor, a memory and a bus. The processor and the memory are connected by the bus. The memory is configured for storing a program, the processor is configured for executing the program, and the program, when executed, implements the method for information interaction based on a vehicle according to the present invention. The method comprises the following steps:
in response to an activating operation by a user, sending a first interaction request to an intelligent terminal having a binding relation with the in-vehicle terminal, to cause the intelligent terminal to execute a responding operation that was deployed in advance in the intelligent terminal; and
after a second interaction request sent by the intelligent terminal has been received, executing a responding operation corresponding to a state of the vehicle.

Particularly, the step of, in response to the activating operation by the user, sending the first interaction request to the intelligent terminal having the binding relation with the in-vehicle terminal, to cause the intelligent terminal to execute the responding operation that was deployed in advance in the intelligent terminal comprises:
sending a binding request to the intelligent terminal in advance, to cause the intelligent terminal to, according to a plug-in link shown by the binding request, download a functional plug-in, and according to a pairing code shown by the binding request, start up a process of deploying the functional plug-in, wherein the functional plug-in contains a responding operation that is pre-configured;
after a binding-succeeding prompt sent by the intelligent terminal has been received, determining to establish the binding relation between the in-vehicle terminal and the intelligent terminal; and
in response to the activating operation by the user, sending the first interaction request to the intelligent terminal, to cause the intelligent terminal to execute the responding operation deployed in the intelligent terminal.

Particularly, after the step of, in response to the activating operation by the user, sending the first interaction request to the intelligent terminal having the binding relation with the in-vehicle terminal, to cause the intelligent terminal to execute the responding operation that was deployed in advance in the intelligent terminal, the method further comprises:
receiving an interaction-succeeding signal that is fed back by the intelligent terminal based on the first interaction request, and executing a feeding-back operation that was deployed in advance in the in-vehicle terminal.

Particularly, the step of, after the second interaction request sent by the intelligent terminal has been received, executing the responding operation corresponding to the state of the vehicle comprises:
after the second interaction request sent by the intelligent terminal has been received, acquiring the state of the vehicle;
if the vehicle is in a powering-off state, executing a first responding operation, wherein the first responding operation is for sending a notification request to a mobile device of the user, to cause the mobile device to play a predetermined animation and a predetermined prompt tone;
if the vehicle is in a powering-on state and a stationary state, executing a second responding operation, wherein the second responding operation is for controlling a center-control screen to play the predetermined animation, controlling an ambient light to operate, and controlling a loudspeaker box to play the predetermined prompt tone; and
if the vehicle is in the powering-on state and a travelling state, executing a third responding operation, wherein the third responding operation is for controlling the center-control screen to display a predetermined pop-up window, and controlling the loudspeaker box to play the predetermined prompt tone.

Particularly, after the step of, after the second interaction request sent by the intelligent terminal has been received, executing the responding operation corresponding to the state of the vehicle, the method further comprises:
sending an interaction-succeeding signal to the intelligent terminal, to cause the intelligent terminal to execute a feeding-back operation that was deployed in advance in the intelligent terminal.

The functions of the method of the present invention, if embodied in the form of software function units and sold or used as an independent product, may be stored in a computing-device-readable storage medium. On the basis of such a comprehension, the part of the present invention that makes a contribution over the prior art, or part of the technical solutions, may be embodied in the form of a software product. The software product is stored in a storage medium, and contains multiple instructions configured so that a computing device (which may be a personal computer, a server, a mobile computing device, a network device and so on) implements all or some of the steps of the above methods of the present invention. Moreover, the above-described storage medium includes various media that can store a program code, such as a USB flash disk, a mobile hard disk drive, a read-only memory, a random access memory, a diskette and an optical disk.

The description is described in the mode of progression, each of the examples emphatically describes the differences from the other examples, and the same or similar parts of the examples may refer to each other.

## Claims

1. A vehicle-based method for information interaction, wherein the method executed by an in-vehicle terminal, and comprises:
(S201) sending a binding request to the intelligent terminal in advance, to cause the intelligent terminal to, according to a plug-in link shown by the binding request, download a functional plug-in, and according to a pairing code shown by the binding request, start up a process of deploying the functional plug-in, wherein the functional plug-in contains a responding operation that is pre-configured;
(S202) after determining a binding-succeeding prompt sent by the intelligent terminal has been received, establishing the binding relation between the in-vehicle terminal and the intelligent terminal; and
(S203) in response to the activating operation by the user, sending the first interaction request to the intelligent terminal, to cause the intelligent terminal to execute the responding operation deployed in the intelligent terminal; and
(S102) after a second interaction request sent by the intelligent terminal has been received, executing one of several predetermined responding operations corresponding to a state of the vehicle.

2. The method according to claim 1, wherein after the step of, (S101) in response to the activating operation by the user, sending the first interaction request to the intelligent terminal having the binding relation with the in-vehicle terminal, to cause the intelligent terminal to execute the responding operation that was deployed in advance in the intelligent terminal, the method further comprises:
(S204) receiving an interaction-succeeding signal that is fed back by the intelligent terminal based on the first interaction request, and executing a feeding-back operation that was deployed in advance in the in-vehicle terminal.

3. The method according to claims 1 or 2, wherein the step of, (S102) after the second interaction request sent by the intelligent terminal has been received, executing the responding operation corresponding to the state of the vehicle comprises:
(S205) after the second interaction request sent by the intelligent terminal has been received, acquiring the state of the vehicle;
(S206) if the vehicle is in a powering-off state, executing a first responding operation, wherein the first responding operation is for sending a notification request to a mobile device of the user, to cause the mobile device to play a predetermined animation and a predetermined prompt tone;
(S207) if the vehicle is in a powering-on state and a stationary state, executing a second responding operation, wherein the second responding operation is for controlling a center-control screen to play the predetermined animation, controlling an ambient light to operate, and controlling a loudspeaker box to play the predetermined prompt tone; and
(S208) if the vehicle is in the powering-on state and a travelling state, executing a third responding operation, wherein the third responding operation is for controlling the center-control screen to display a predetermined pop-up window, and controlling the loudspeaker box to play the predetermined prompt tone.

4. The method according to any one of claims 1-3, wherein after the step of, (S101) after the second interaction request sent by the intelligent terminal has been received, executing the responding operation corresponding to the state of the vehicle, the method further comprises:
(S209) sending an interaction-succeeding signal to the intelligent terminal, to cause the intelligent terminal to execute a feeding-back operation that was deployed in advance in the intelligent terminal.

5. An in-vehicle terminal, wherein the in-vehicle terminal comprises a responding unit (901) and a controlling unit (903), wherein:
the responding unit (901) is configured to:
send a binding request to the intelligent terminal in advance, causing the intelligent terminal to, according to a plug-in link shown by the binding request, download a functional plug-in, and according to a pairing code shown by the binding request, start up a process of deploying the functional plug-in, wherein the functional plug-in contains a responding operation that is pre-configured;
after determining a binding-succeeding prompt sent by the intelligent terminal has been received, to establish the binding relation between the in-vehicle terminal and the intelligent terminal; and
in response to the activating operation by the user, send the first interaction request to the intelligent terminal, to cause the intelligent terminal to execute the responding operation deployed in the intelligent terminal; and
wherein the controlling unit (903) is configured for, after a second interaction request sent by the intelligent terminal has been received, executing one of several predetermined responding operations corresponding to a state of the vehicle.

6. The in-vehicle terminal according to claim 5, wherein the in-vehicle terminal further comprises a feeding-back unit (902) configured for receiving an interaction-succeeding signal that is fed back by the intelligent terminal based on the first interaction request, and controlling the vehicle to execute a feeding-back operation that was deployed in advance in the in-vehicle terminal.

7. The in-vehicle terminal according to claim 5 or 6, wherein the controlling unit (903) is configured for, after the second interaction request sent by the intelligent terminal has been received,
acquiring the state of the vehicle; and
if the vehicle is in a powering-off state, executing a first responding operation, wherein the first responding operation is for sending a notification request to a mobile device of the user, to cause the mobile device to play a predetermined animation and a predetermined prompt tone;
if the vehicle is in a powering-on state and a stationary state, executing a second responding operation, wherein the second responding operation is for controlling a center-control screen to play the predetermined animation, controlling an ambient light to operate, and controlling a loudspeaker box to play the predetermined prompt tone; and
if the vehicle is in the powering-on state and a travelling state, executing a third responding operation, wherein the third responding operation is for controlling the center-control screen to display a predetermined pop-up window, and controlling the loudspeaker box to play the predetermined prompt tone.

8. The in-vehicle terminal according to any of claims 5-7, wherein the in-vehicle terminal further comprises a sending unit (904) configured for sending an interaction-succeeding signal to the intelligent terminal, to cause the intelligent terminal to execute a feeding-back operation that was deployed in advance in the intelligent terminal.

9. A computer-readable storage medium, wherein the computer-readable storage medium contains a stored program, and the program implements the vehicle-based method for information interaction according to any one of claims 1-4.

10. A vehicle, wherein the vehicle comprises:
a processor, a memory and a bus;
the processor and the memory are connected by the bus; and
the memory is configured for storing a program, the processor is configured for executing the program, and the program, when executed, implements the vehicle-based method for information interaction according to any one of claims 1-4.

## Patentansprüche

1. Fahrzeugbasiertes Informationsinteraktionsverfahren, wobei das Verfahren von einem fahrzeuginternen Endgerät ausgeführt, und aufweist:
(S201) Senden einer Bindungsanforderung an das intelligente Endgerät im Voraus, um zu bewirken, dass das intelligente Endgerät gemäß einem durch die Bindungsanforderung angegebenen Plug-in-Link ein funktionales Plug-in herunterlädt und gemäß einem durch die Bindungsanforderung angegebenen Pairing-Code einen Prozess des Bereitstellens des funktionalen Plug-ins startet, wobei das funktionale Plug-in einen Reaktionsvorgang enthält, der vorkonfiguriert ist;
(S202) nach dem Bestimmen, dass ein von dem intelligenten Endgerät gesendeter Bindungserfolgshinweis empfangen wurde, Herstellen der Bindungsbeziehung zwischen dem fahrzeuginternen Endgerät und dem intelligenten Endgerät; und
(S203) als Reaktion auf den Aktivierungsvorgang durch den Benutzer, Senden der ersten Interaktionsanforderung an das intelligente Endgerät, um zu bewirken, dass das intelligente Endgerät den in dem intelligenten Endgerät bereitgestellten Reaktionsvorgang ausführt; und
(S102) nachdem eine von dem intelligenten Endgerät gesendete zweite Interaktionsanforderung empfangen wurde, Ausführen eines von mehreren vorbestimmten Reaktionsvorgängen, der einem Zustand des Fahrzeugs entspricht.

2. Verfahren nach Anspruch 1, wobei nach dem Schritt des (S101) als Reaktion auf den Aktivierungsvorgang durch den Benutzer erfolgenden Sendens der ersten Interaktionsanforderung an das intelligente Endgerät, das die Bindungsbeziehung mit dem fahrzeuginternen Endgerät aufweist, um zu bewirken, dass das intelligente Endgerät den Reaktionsvorgang ausführt, der im Voraus in dem intelligenten Endgerät bereitgestellt wurde, das Verfahren ferner aufweist:
(S204) Empfangen eines Interaktionserfolgssignals, das von dem intelligenten Endgerät auf Grundlage der ersten Interaktionsanforderung zurückgemeldet wird, und Ausführen eines Rückmeldevorgangs, der im Voraus in dem fahrzeuginternen Endgerät bereitgestellt wurde.

3. Verfahren nach den Ansprüchen 1 oder 2, wobei der Schritt (S102) des, nachdem die von dem intelligenten Endgerät gesendete zweite Interaktionsanforderung empfangen wurde, erfolgenden Ausführens des Reaktionsvorgangs, der dem Zustand des Fahrzeugs entspricht, aufweist:
(S205) nachdem die von dem intelligenten Endgerät gesendete zweite Interaktionsanforderung empfangen wurde,
Erfassen des Zustands des Fahrzeugs;
(S206) wenn sich das Fahrzeug in einem Ausschaltzustand befindet, Ausführen eines ersten Reaktionsvorgangs, wobei der erste Reaktionsvorgang zum Senden einer Benachrichtigungsanforderung an ein mobiles Gerät des Benutzers dient, um zu bewirken, dass das mobile Gerät eine vorbestimmte Animation und einen vorbestimmten Hinweiston abspielt;
(S207) wenn sich das Fahrzeug in einem Einschaltzustand und einem Stillstandszustand befindet, Ausführen eines zweiten Reaktionsvorgangs, wobei der zweite Reaktionsvorgang zum Steuern eines Zentralsteuerbildschirms zum Abspielen der vorbestimmten Animation, zum Steuern eines Umgebungslichts zum Arbeiten und zum Steuern einer Lautsprecherbox zum Abspielen des vorbestimmten Hinweistons dient; und
(S208) wenn sich das Fahrzeug in dem Einschaltzustand und einem Fahrzustand befindet, Ausführen eines dritten Reaktionsvorgangs, wobei der dritte Reaktionsvorgang zum Steuern des Zentralsteuerbildschirms zum Anzeigen eines vorbestimmten Pop-up-Fensters und zum Steuern der Lautsprecherbox zum Abspielen des vorbestimmten Hinweistons dient.

4. Verfahren nach einem der Ansprüche 1-3, wobei nach dem Schritt des (S101), nachdem die von dem intelligenten Endgerät gesendete zweite Interaktionsanforderung empfangen wurde, erfolgenden Ausführens des Reaktionsvorgangs, der dem Zustand des Fahrzeugs entspricht, das Verfahren ferner aufweist:
(S209) Senden eines Interaktionserfolgssignals an das intelligente Endgerät, um zu bewirken, dass das intelligente Endgerät einen Rückmeldevorgang ausführt, der im Voraus in dem intelligenten Endgerät bereitgestellt wurde.

5. Fahrzeuginternes Endgerät, wobei das fahrzeuginterne Endgerät eine Reaktionseinheit (901) und eine Steuereinheit (903) aufweist, wobei:
die Reaktionseinheit (901) konfiguriert ist zum:
Senden einer Bindungsanforderung an das intelligente Endgerät im Voraus, wodurch bewirkt wird, dass das intelligente Endgerät gemäß einem durch die Bindungsanforderung angegebenen Plug-in-Link ein funktionales Plug-in herunterlädt und gemäß einem durch die Bindungsanforderung angegebenen Pairing-Code einen Prozess des Bereitstellens des funktionalen Plug-ins startet, wobei das funktionale Plug-in einen Reaktionsvorgang enthält, der vorkonfiguriert ist;
nach dem Bestimmen, dass ein von dem intelligenten Endgerät gesendeter Bindungserfolgshinweis empfangen wurde, Herstellen der Bindungsbeziehung zwischen dem fahrzeuginternen Endgerät und dem intelligenten Endgerät; und
als Reaktion auf den Aktivierungsvorgang durch den Benutzer, Senden der ersten Interaktionsanforderung an das intelligente Endgerät, um zu bewirken, dass das intelligente Endgerät den in dem intelligenten Endgerät bereitgestellten Reaktionsvorgang ausführt; und
wobei die Steuereinheit (903) konfiguriert ist zum, nachdem eine von dem intelligenten Endgerät gesendete zweite Interaktionsanforderung empfangen wurde, Ausführen eines von mehreren vorbestimmten Reaktionsvorgängen, der einem Zustand des Fahrzeugs entspricht.

6. Fahrzeuginternes Endgerät nach Anspruch 5, wobei das fahrzeuginterne Endgerät ferner eine Rückmeldeeinheit (902) aufweist, die konfiguriert ist zum Empfangen eines Interaktionserfolgssignals, das von dem intelligenten Endgerät auf Grundlage der ersten Interaktionsanforderung zurückgemeldet wird, und zum Steuern des Fahrzeugs zum Ausführen eines Rückmeldevorgangs, der im Voraus in dem fahrzeuginternen Endgerät bereitgestellt wurde.

7. Fahrzeuginternes Endgerät nach Anspruch 5 oder 6, wobei die Steuereinheit (903) konfiguriert ist zum, nachdem die von dem intelligenten Endgerät gesendete zweite Interaktionsanforderung empfangen wurde,
Erfassen des Zustands des Fahrzeugs; und
wenn sich das Fahrzeug in einem Ausschaltzustand befindet, Ausführen eines ersten Reaktionsvorgangs, wobei der erste Reaktionsvorgang zum Senden einer Benachrichtigungsanforderung an ein mobiles Gerät des Benutzers dient, um zu bewirken, dass das mobile Gerät eine vorbestimmte Animation und einen vorbestimmten Hinweiston abspielt;
wenn sich das Fahrzeug in einem Einschaltzustand und einem Stillstandszustand befindet, Ausführen eines zweiten Reaktionsvorgangs, wobei der zweite Reaktionsvorgang zum Steuern eines Zentralsteuerbildschirms zum Abspielen der vorbestimmten Animation, zum Steuern eines Umgebungslichts zum Arbeiten und zum Steuern einer Lautsprecherbox zum Abspielen des vorbestimmten Hinweistons dient; und
wenn sich das Fahrzeug in dem Einschaltzustand und einem Fahrzustand befindet, Ausführen eines dritten Reaktionsvorgangs, wobei der dritte Reaktionsvorgang zum Steuern des Zentralsteuerbildschirms zum Anzeigen eines vorbestimmten Pop-up-Fensters und zum Steuern der Lautsprecherbox zum Abspielen des vorbestimmten Hinweistons dient.

8. Fahrzeuginternes Endgerät nach einem der Ansprüche 5-7, wobei das fahrzeuginterne Endgerät ferner eine Sendeeinheit (904) aufweist, die konfiguriert ist zum Senden eines Interaktionserfolgssignals an das intelligente Endgerät, um zu bewirken, dass das intelligente Endgerät einen Rückmeldevorgang ausführt, der im Voraus in dem intelligenten Endgerät bereitgestellt wurde.

9. Computerlesbares Speichermedium, wobei das computerlesbare Speichermedium ein gespeichertes Programm enthält und das Programm das fahrzeugbasierte Informationsinteraktionsverfahren nach einem der Ansprüche 1-4 implementiert.

10. Fahrzeug, wobei das Fahrzeug aufweist:
einen Prozessor, einen Speicher und einen Bus;
der Prozessor und der Speicher sind durch den Bus verbunden; und
der Speicher ist zum Speichern eines Programms konfiguriert, der Prozessor ist zum Ausführen des Programms konfiguriert, und das Programm implementiert bei seiner Ausführung das fahrzeugbasierte Informationsinteraktionsverfahren nach einem der Ansprüche 1-4.

## Revendications

1. Procédé d'interaction d'informations basé sur véhicule, dans lequel le procédé est exécuté par un terminal embarqué dans un véhicule et comprend :
(S201) l'envoi préalable d'une demande de liaison au terminal intelligent afin de forcer le terminal intelligent à télécharger, conformément à un lien de module enfichable qui est indiqué par la demande de liaison, un module enfichable fonctionnel, et à démarrer, conformément à un code d'appariement qui est indiqué par la demande de liaison, un processus de déploiement du module enfichable fonctionnel, dans lequel le module enfichable fonctionnel contient une opération de réponse qui est préconfigurée ;
(S202) après la détermination du fait qu'une invite qui fait suite à la liaison et qui a été envoyée par le terminal intelligent a été reçue, l'établissement d'une relation de liaison entre le terminal embarqué dans le véhicule et le terminal intelligent ; et
(S203) en réponse à une opération d'activation effectuée par un utilisateur, l'envoi d'une première demande d'interaction au terminal intelligent afin de forcer le terminal intelligent à exécuter l'opération de réponse qui a été déployée dans le terminal intelligent ; et
(S102) après qu'une deuxième demande d'interaction qui a été envoyée par le terminal intelligent a été reçue, l'exécution de celle d'une pluralité d'opérations de réponse prédéterminées qui correspond à un état du véhicule.

2. Procédé selon la revendication 1, dans lequel, après l'étape (S203) consistant à, en réponse à l'opération d'activation effectuée par l'utilisateur, envoyer la première demande d'interaction au terminal intelligent qui dispose de la relation de liaison avec le terminal embarqué dans le véhicule afin de forcer le terminal intelligent à exécuter l'opération de réponse qui a été préalablement déployée dans le terminal intelligent, le procédé comprend en outre :
(S204) la réception d'un signal qui fait suite à l'interaction et qui est retourné par le terminal intelligent sur la base de la première demande d'interaction et l'exécution d'une opération de retour d'information qui a été préalablement déployée dans le terminal embarqué dans le véhicule.

3. Procédé selon la revendication 1 ou 2, dans lequel l'étape (S102) consistant à, après que la deuxième demande d'interaction qui a été envoyée par le terminal intelligent a été reçue, exécuter l'opération de réponse qui correspond à l'état du véhicule comprend :
(S205) après que la deuxième demande d'interaction qui a été envoyée par le terminal intelligent a été reçue, l'acquisition de l'état du véhicule ;
(S206) si le véhicule est dans un état hors tension, l'exécution d'une première opération de réponse, dans lequel la première opération de réponse consiste à envoyer une demande de notification à un dispositif mobile de l'utilisateur afin de forcer le dispositif mobile à diffuser une animation prédéterminée et un signal sonore d'invite prédéterminé ;
(S207) si le véhicule est dans un état sous tension et dans un état immobile, l'exécution d'une deuxième opération de réponse, dans lequel la deuxième opération de réponse consiste à commander un écran de contrôle central pour diffuser l'animation prédéterminée, à commander un éclairage d'ambiance pour qu'il soit opérationnel et à commander un boîtier de haut-parleur pour diffuser le signal sonore d'invite prédéterminé ; et
(S208) si le véhicule est dans l'état sous tension et dans un état de déplacement, l'exécution d'une troisième opération de réponse, dans lequel la troisième opération de réponse consiste à commander l'écran de contrôle central pour afficher une fenêtre contextuelle prédéterminée et à commander le boîtier de haut-parleur pour diffuser le signal sonore d'invite prédéterminé.

4. Procédé selon l'une quelconque des revendications 1 à 3, dans lequel, après l'étape (S102) consistant à, après que la deuxième demande d'interaction qui a été envoyée par le terminal intelligent a été reçue, exécuter l'opération de réponse qui correspond à l'état du véhicule, le procédé comprend en outre :
(S209) l'envoi d'un signal qui fait suite à l'interaction au terminal intelligent afin de forcer le terminal intelligent à exécuter une opération de retour d'information qui a été préalablement déployée dans le terminal intelligent.

5. Terminal embarqué dans un véhicule, dans lequel le terminal embarqué dans un véhicule comprend une unité de réponse (901) et une unité de commande (903),
dans lequel :
l'unité de réponse (901) est configurée pour :
envoyer préalablement une demande de liaison au terminal intelligent afin de forcer le terminal intelligent à télécharger, conformément à un lien de module enfichable qui est indiqué par la demande de liaison, un module enfichable fonctionnel, et à démarrer, conformément à un code d'appariement qui est indiqué par la demande de liaison, un processus de déploiement du module enfichable fonctionnel, dans lequel le module enfichable fonctionnel contient une opération de réponse qui est préconfigurée ;
après la détermination du fait qu'une invite qui fait suite à la liaison et qui a été envoyée par le terminal intelligent a été reçue, établir une relation de liaison entre le terminal embarqué dans le véhicule et le terminal intelligent ; et
en réponse à une opération d'activation effectuée par un utilisateur, envoyer une première demande d'interaction au terminal intelligent afin de forcer le terminal intelligent à exécuter l'opération de réponse qui a été déployée dans le terminal intelligent ; et
dans lequel :
l'unité de commande (903) est configurée pour :
après qu'une deuxième demande d'interaction qui a été envoyée par le terminal intelligent a été reçue, exécuter celle d'une pluralité d'opérations de réponse prédéterminées qui correspond à un état du véhicule.

6. Terminal embarqué dans un véhicule selon la revendication 5, dans lequel le terminal embarqué dans un véhicule comprend en outre une unité de retour d'information (902) configurée pour recevoir un signal qui fait suite à l'interaction et qui est retourné par le terminal intelligent sur la base de la première demande d'interaction et pour commander le véhicule afin qu'il exécute une opération de retour d'information qui a été préalablement déployée dans le terminal embarqué dans le véhicule.

7. Terminal embarqué dans un véhicule selon la revendication 5 ou 6, dans lequel l'unité de commande (903) est configurée pour, après que la deuxième demande d'interaction qui a été envoyée par le terminal intelligent a été reçue,
acquérir l'état du véhicule ; et
si le véhicule est dans un état hors tension, exécuter une première opération de réponse, dans lequel la première opération de réponse consiste à envoyer une demande de notification à un dispositif mobile de l'utilisateur afin de forcer le dispositif mobile à diffuser une animation prédéterminée et un signal sonore d'invite prédéterminé ;
si le véhicule est dans un état sous tension et dans un état immobile, exécuter une deuxième opération de réponse, dans lequel la deuxième opération de réponse consiste à commander un écran de contrôle central pour diffuser l'animation prédéterminée, à commander un éclairage d'ambiance pour qu'il soit opérationnel et à commander un boîtier de haut-parleur pour diffuser le signal sonore d'invite prédéterminé ; et
si le véhicule est dans l'état sous tension et dans un état de déplacement, exécuter une troisième opération de réponse, dans lequel la troisième opération de réponse consiste à commander l'écran de contrôle central pour afficher une fenêtre contextuelle prédéterminée et à commander le boîtier de haut-parleur pour diffuser le signal sonore d'invite prédéterminé.

8. Terminal embarqué dans un véhicule selon l'une quelconque des revendications 5 à 7, dans lequel le terminal embarqué dans un véhicule comprend en outre une unité d'envoi (904) configurée pour envoyer un signal qui fait suite à l'interaction au terminal intelligent afin de forcer le terminal intelligent à exécuter une opération de retour d'information qui a été préalablement déployée dans le terminal intelligent.

9. Support de stockage lisible par ordinateur, dans lequel le support de stockage lisible par ordinateur contient un programme stocké, et le programme met en œuvre le procédé d'interaction d'informations basé sur véhicule selon l'une quelconque des revendications 1 à 4.

10. Véhicule, dans lequel le véhicule comprend :
un processeur, une mémoire et un bus ;
le processeur et la mémoire sont connectés par l'intermédiaire du bus ; et
la mémoire est configurée pour stocker un programme, le processeur est configuré pour exécuter le programme et le programme, lorsqu'il est exécuté, met en œuvre le procédé d'interaction d'informations basé sur véhicule selon l'une quelconque des revendications 1 à 4.
